# EUROPEAN PATENT APPLICATION

(11) **EP 4 752 048 A1**
(43) Date of publication of application: **03.06.2026**
(21) Application number: 25217916.3
(22) Date of filing: 24.11.2025
(51) Int. Cl.: B64C 3/26, B64C 3/28, B64C 21/10

(54) **FIXED LEADING EDGE ASSEMBLY**

(30) Priority: 29.11.2024 GB 202417580
(71) Applicant: Airbus Operations Limited, Bristol BS34 7PA (GB)
(72) Inventor: EVANS, Connor, Bristol, BS34 7PA (GB); PAGETT, Jacob, Bristol, BS34 7PA (GB)
(74) Representative: Harvey, Alexander James

(57) **Abstract**

The present invention relates to a riblet for a fixed leading edge (FLE) assembly. The aforementioned riblet comprises a first riblet portion having a first aft mounting for attaching the first riblet portion to a wing box assembly and also having a forward mounting opposite the first aft mounting. The aforementioned riblet also comprises a second riblet portion having a second aft mounting for attaching the second riblet portion to the forward mounting of the first riblet portion.

## Description

### FIELD OF THE INVENTION

The present invention relates to a riblet for a fixed leading edge (FLE) assembly, to a fixed leading edge assembly comprising said riblet, to a fixed leading edge module, to an airfoil structure comprising said fixed leading edge assembly, to an aircraft comprising said airfoil structure, and to a method of assembling said airfoil structure.

### BACKGROUND OF THE INVENTION

Airfoil structures that are found in a variety of aircraft, spacecraft and wind turbine applications typically comprise a wing box structure, which includes one or more longitudinal spars, a plurality of transverse ribs, and is enclosed by structural covers. A fixed leading edge (FLE) structure and/or a fixed trailing edge (FTE) structure may be attached to such a wing box structure to form an airfoil shape.

Increasing production throughput is a common goal throughout the aircraft manufacturing industry to help meet the growing global demand for aircraft, which necessitates faster aircraft delivery times.

However, fixed leading edge (FLE) structures currently take a lot of time to assemble and subsequently install since very little assembly can be done on the FLE structure ahead of time. Furthermore, due to all of the systems that need to be installed through the FLE structure, very little work can be done on the FLE structure in parallel with other assembly processes.

It is an aim of the present invention to provide a solution to this problem.

### SUMMARY OF THE INVENTION

According to a first aspect of the present invention, there is provided a riblet for a fixed leading edge (FLE) assembly comprising a first riblet portion and a second riblet portion, wherein the first riblet portion comprises a first aft mounting for attaching the first riblet portion to a wing box assembly and a forward mounting opposite the first aft mounting, and wherein the second riblet portion comprises a second aft mounting for attaching the second riblet portion to the forward mounting of the first riblet portion.

Advantageously, the provision of a riblet having a two-part construction enables aircraft assembly personnel to attach the first riblet portion to the forward (e.g., leading edge) spar of a wing box assembly prior to attachment and/or assembly of the second riblet portion.

This provides aircraft assembly personnel with full and uninterrupted access to the first riblet portion and to the corresponding fittings provided on the forward spar of the wing box assembly, thereby improving ease of assembly.

Furthermore, since the first riblet portion is significantly smaller and lighter than the full fixed leading edge assembly, the two-part construction of said riblet also makes it easier for assembly personnel to manoeuvre and align the first riblet portion to the forward spar of the wing box assembly as may be required during assembly since this can be done before the rest of the fixed leading edge assembly has been assembled.

In addition, the two-part construction of the riblet also enables work to be carried out on the second riblet portion in parallel to the first riblet portion being attached to the forward spar of the wing box assembly, thereby helping to further reduce aircraft assembly times.

In exemplary embodiments, the forward mounting of the first riblet portion and the second aft mounting of the second riblet portion may each comprise a fastener hole, and the riblet may further comprise at least one fastener extending in a chordwise direction between said fastener holes.

It shall be appreciated that the respective fastener holes are pre-drilled into the first and second riblet portions.

The term "pre-drilled" is defined herein to mean that the respective fastener holes are formed in first and second riblet portions before the first and second riblets portions have been brought together and aligned. In other words, the first and second riblet portions are joined together via a "hole-to-hole" connection. As such, the first and second riblet portions are brought together for the first time and attached (via the at least one fastener) during final assembly.

Advantageously, the use of such "hole-to-hole" connections enables the first and second riblet portions to be joined without requiring any part-to-part drilling prior to final assembly which helps to further improve aircraft assembly times.

In exemplary embodiments, the forward mounting of the first riblet portion and the second aft mounting of the second riblet portion may each comprise a plurality of fastener holes which are spaced apart in the thickness direction, and the riblet may further comprise a plurality of fasteners extending in the chordwise direction between the respective fastener holes.

In exemplary embodiments, at least one of the forward mounting and/or the second aft mounting may comprise an eccentric bush for adjusting a position and/or orientation of the fastener hole with respect to the second aft mounting and/or the forward mounting.

Advantageously, the provision of an eccentric bush affords manufacturers with improved tolerance control in the thickness-wise (Z-axis) direction between the first and second riblet portions.

In exemplary embodiments, the first aft mounting of the first riblet portion may be without a fastener hole prior to aligning the first riblet portion to the wing box assembly.

In other words, the first riblet portion may be joined to the wing box assembly via a "part-to-part" connection in which the first riblet portion and the wing box assembly are brought together and drilled prior to final assembly.

Advantageously, the use of a "part-to-part" connection between the first riblet portion and the forward spar provides manufacturers with improved tolerance control in the thickness-wise (Z-axis) and spanwise (X-axis) directions.

In exemplary embodiments, the first riblet portion may comprises first and second aft projections which are spaced apart in the thickness direction.

In exemplary embodiments, the first riblet portion may further comprise a first cavity defined between the first and second aft projections, said first cavity being configured for receiving one or more aircraft sub-systems.

The one or more aircraft sub-systems may be electrical sub-systems (e.g., power control systems and/or signalling control systems); hydraulics sub-systems; hot air bleed sub-systems; and/or mechanical sub-systems (e.g., a drive-shaft).

In exemplary embodiments, the first riblet portion may comprise a plurality of first aft mountings which are spaced apart in the thickness direction.

In exemplary embodiments, the plurality of first aft mountings may lie on the same plane.

Advantageously, providing the plurality of first aft mountings on the same plane enables the fixed leading edge assembly to be build up in a series of layers, thereby further improving ease of access for aircraft assembly personnel.

In exemplary embodiments, the plurality of first aft mountings may be located on the first and second aft projections.

In exemplary embodiments, the second riblet portion may be substantially D-shaped when viewed in a spanwise direction.

It shall be appreciated that the second riblet portion may alternatively be referred to as a leading edge D-nose portion.

In exemplary embodiments, the riblet may further comprise a second cavity formed between the first and second riblet portions, said second cavity being configured for receiving one or more aircraft sub-systems.

Advantageously, the provision of a second cavity formed between the first and second riblet portions allows the one or more aircraft sub-systems received therein to be better isolated from the forward (e.g., leading edge) spar of the wing box assembly.

The one or more aircraft sub-systems may be electrical sub-systems (e.g., power control systems and/or signalling control systems); hydraulics sub-systems; hot air bleed sub-systems; and/or mechanical sub-systems (e.g., a drive-shaft).

In exemplary embodiments, the riblet may comprise a joint line which extends through a thickness of the riblet between the first and second riblet portions.

In exemplary embodiments, the joint line may intersect the second cavity.

Advantageously, positioning the second cavity on said joint line enables the components which make up the one or more aircraft sub-systems to be more easily laid into the second cavity during assembly, thereby helping to further reduce aircraft assembly times.

According to a second aspect of the present invention, there is provided a fixed leading edge (FLE) assembly comprising a riblet according to the first aspect of the present invention, and a D-nose cover which defines an aerodynamic surface of the fixed leading edge assembly, wherein said D-nose cover is attached to the second riblet portion.

In exemplary embodiments, the fixed leading edge (FLE) assembly may comprise a plurality of riblets disposed at regular intervals in a span-wise direction along the fixed leading edge assembly.

In exemplary embodiments, the D-nose cover may not be directly connected to the first riblet portion.

Advantageously, leaving the first riblet portion unconnected to D-nose cover provides the fixed leading edge (FLE) assembly with a tolerance gap in the thickness (Z-axis) direction to allow for vertical adjustments of the position of the first riblet portion relative the second riblet portion as may be required to in order to meet aerodynamic requirements and/or to manage the gap between the D-nose cover of the fixed leading edge (FLE) assembly and the cover of the wing box assembly.

In exemplary embodiments, the D-nose cover may comprise at least one access hole configured to provide access to the riblet.

According to a third aspect of the present invention, there is provided a fixed leading edge (FLE) module comprising a D-nose cover which defines an aerodynamic surface of the fixed leading edge (FLE) module and a second riblet portion comprising a second aft mounting for attaching to a forward mounting of a first riblet portion, wherein said D-nose cover is attached to the second riblet portion.

In exemplary embodiments, the fixed leading edge module may comprise a plurality of second riblet portions disposed at regular intervals in a span-wise direction along the fixed leading edge module.

According to a fourth aspect of the present invention, there is provided an airfoil structure comprising a wing box assembly having a forward spar and at least one airfoil cover which defines an aerodynamic surface of the airfoil structure; and a fixed leading edge (FLE) assembly according to the second aspect of the present invention, wherein said fixed leading edge assembly is attached to the forward spar via the first aft mounting of the first riblet portion.

In exemplary embodiments, the airfoil cover and D-nose may cover together form a substantially flush aerodynamic surface.

In exemplary embodiments, the airfoil cover and D-nose cover may be joined together via a skin joint or a butt joint.

In exemplary embodiments, the airfoil structure may comprise a plurality of fixed leading edge assemblies according the second aspect of the present invention.

In exemplary embodiments, the airfoil structure may be an aircraft wing.

According to a fifth aspect of the present invention, there is provided an aircraft comprising the airfoil structure according to the fourth aspect of the present invention.

According to a sixth aspect of the present invention, there is provided a method of assembling the airfoil structure according to the fourth aspect of the present invention, wherein said method comprises:
a) aligning the first aft mounting of the first riblet portion with a respective fitting provided on a forward spar of the airfoil structure;
b) drilling at least one hole into the airfoil structure for receiving a respective fastener, wherein said hole extends through the fitting and through the first aft mounting of the first riblet portion;
c) inserting a fastener into the at least one hole so as to attach the first riblet portion to the fitting provided on the forward spar; and
d) after the first riblet portion has been attached to the forward spar, attaching the second aft mounting of the second riblet portion to the forward mounting of the first riblet portion.

Advantageously, it shall be appreciated that since the first riblet portion can be attached to the forward (e.g., leading edge) spar of the wing box assembly prior to attachment of the second riblet portion, aircraft assembly personnel are provided with full and uninterrupted access to the first riblet portion and to the corresponding fittings provided on the forward (e.g., leading edge) spar which greatly improves ease of assembly and hence thereby helps to reduce aircraft assembly times.

Furthermore, as well as improving ease of access for aircraft assembly personnel, the claimed invention also allows aircraft assembly personnel to carry out work on the second riblet portion concurrently as the first riblet portion is being joined to the forward spar, thereby helping to further reduce aircraft assembly times and hence further improving production throughput.

It shall also be appreciated that the use of a "part-to-part" connection between the first riblet portion and the forward spar provides manufacturers with improved tolerance control in the thickness-wise (Z-axis) and spanwise (X-axis) directions.

In exemplary embodiments, the D-nose cover may be attached to the second riblet portion prior to step d).

In exemplary embodiments, the forward spar may comprise a plurality of fittings which are spaced apart in the thickness direction, and the method may further comprise, prior to step c), installing one or more aircraft sub-systems in a space defined between the plurality of fittings provided on the forward spar.

In exemplary embodiments, the riblet may comprises a second cavity formed between the first and second riblet portions, and the method may further comprise, between steps c) and d), installing one or more aircraft sub-systems into the second cavity.

According to a seventh aspect of the present invention, there is provided a riblet for an airfoil structure comprising a leading edge nose portion, a tail portion configured to facilitate attachment of the leading edge nose portion to a leading edge spar of the airfoil structure and a joint line extending through a thickness of the riblet between the leading edge nose portion and the tail portion.

### BRIEF DESCRIPTION OF THE DRAWINGS

Embodiments of the invention will now be described with reference to the accompanying drawings, in which:
Figure 1 is a schematic plan view of an aircraft according to an embodiment of the present invention;
Figure 2 is a schematic plan view of a wing of the aircraft illustrated in Figure 1;
Figure 3 is a schematic section view of the fixed leading edge assembly according to an embodiment of the present invention;
Figure 4 is a flow diagram illustrating a method of assembling the aircraft wing according to an embodiment of the present invention; and
Figures 5A to 5F provide schematic illustrations of the various steps of the method illustrated in Figure 4.

### DETAILED DESCRIPTION OF EMBODIMENT(S)

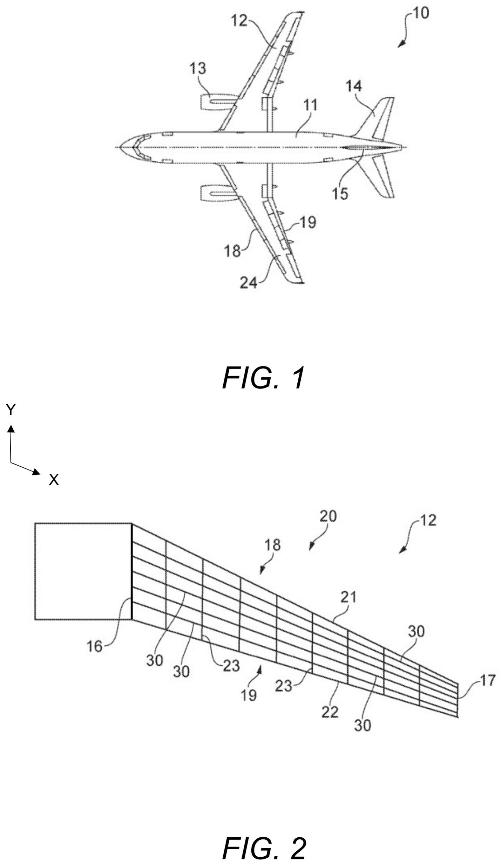

Figure 1 shows an aircraft 10. The aircraft 10 has a fuselage 11, and starboard and port fixed wings 12. An engine 13 is mounted to each wing 12. The aircraft also comprises an empennage (or tail assembly) which includes starboard and port horizontal stabilisers 14 and a vertical stabiliser 15.

In the embodiment illustrated in Figure 1, the aircraft 10 is a typical jet passenger transport aircraft but the invention is applicable to a wide variety of fixed wing aircraft types, including commercial, military, passenger, cargo, jet, propeller, general aviation, etc. with any number of engines 13 attached to the wings 12 or fuselage 11.

A schematic view of a wing box assembly 20 of the starboard wing 12 is shown in Figure 2. The port wing is similar in construction and so only a description of the starboard wing is provided herein.

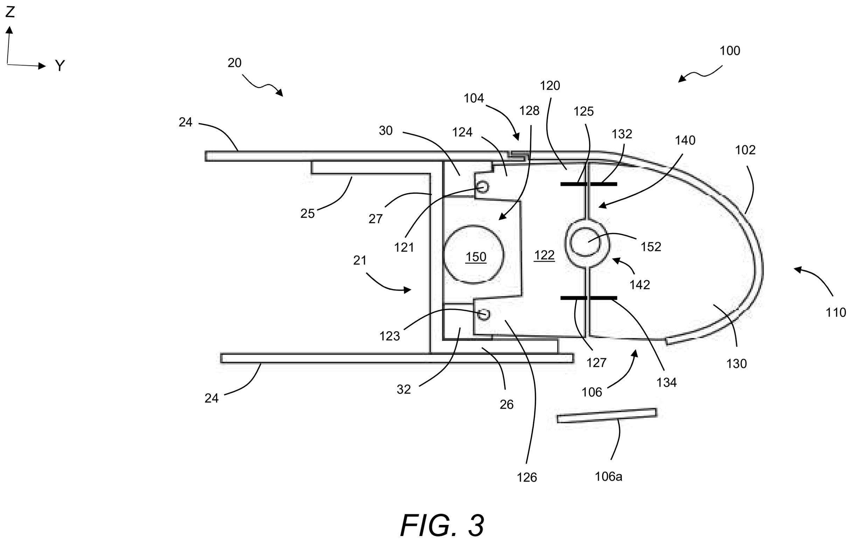

The wing 12 has a cantilevered structure with a length extending in a span-wise direction from a wing root 16 to a wing tip 17, with the wing root 16 being joined to the aircraft fuselage 11. The wing 12 has a leading edge 18 and a trailing edge 19 as shown in Figure 1. The leading edge 18 is at the forward end of the wing 12 and the trailing edge 19 is at the rearward end of the wing 12. The wing 12 comprises the wing box assembly 20 and leading and trailing edge assemblies (shown in Figure 3).

The leading and trailing edge assemblies may comprise one or more control surfaces (e.g., slats, flaps, ailerons, etc.) for controlling movement of the aircraft 10 about its longitudinal and/or transverse axes.

As shown in Figure 2, the wing 12 has a spanwise axis (X) which extends in a direction from the wing root 16 to the wing tip 17, a chordwise axis (Y) which extends in the direction from the leading edge 18 to the trailing edge 19, and a thickness-wise axis (Z - shown in Figure 3) which extends in a direction perpendicular to the chordwise (Y) and spanwise (X) axes.

The wing box assembly 20 forms a structural assembly and includes forward and rear spars 21, 22 extending in a spanwise direction between the wing root 16 to the wing tip 17; ribs 23 extending between the forward and rear spars 21, 22 in a chordwise direction; upper and lower airfoil covers 24 on the upper and lower sides of the wing box assembly 20; and stringers 30, to which the upper and lower airfoil covers 24 are mounted. It shall be appreciated that the upper and lower airfoil covers 24 define the outermost aerodynamic surfaces of the wing box assembly 20.

Each of the forward 21 and rear 22 spars may be formed as a C or Z section with upper 25 and lower 26 flanges extending from an upstanding web 27, the upper and lower skins 24 of the wing box assembly 20 being attached to the flanges 25, 26 of the forward 21 and rear 22 spars respectively.

A schematic section view of a fixed leading edge (FLE) assembly 100 of the starboard wing 12 is shown in Figure 3.

It shall be appreciated that the fixed leading edge assembly of the port wing is similar in construction and so only a description of the starboard wing fixed leading edge assembly 100 is provided herein.

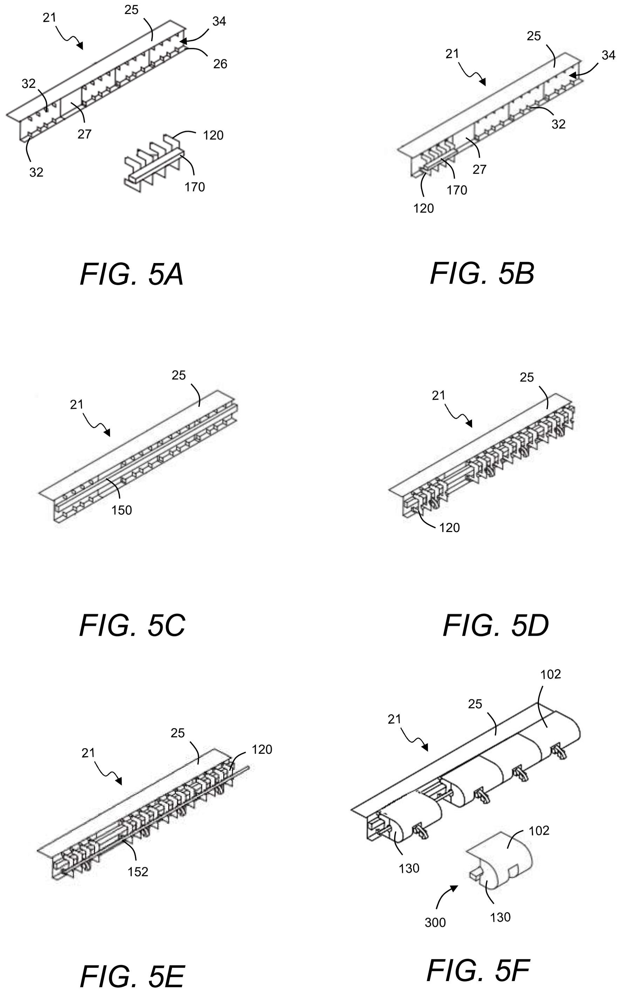

It shall also be appreciated that whilst a single fixed leading edge assembly 100 is depicted in Figure 3, in some embodiments the aircraft wing 12 may comprise a plurality of fixed leading edge assemblies 100 (as shown in Figure 5F) which may be disposed along the leading edge 18 of the aircraft wing 12.

The fixed leading edge assembly 100 (sometimes referred to as a leading edge "D-nose") includes a D-nose cover 102 which defines an aerodynamic surface of the fixed leading edge assembly 100 and a plurality of riblets 110 which are disposed at regular intervals in a span-wise direction along the fixed leading edge assembly 100.

It shall be appreciated that since Figure 3 depicts a section (or side) view of the fixed leading edge assembly 100, only one of the aforementioned riblets 110 is visible in Figure 3.

As shown in Figure 3, the D-nose cover 102 sits substantially flush with the upper airfoil cover 24 of the wing box assembly 20 such that the D-nose cover 102 and the upper airfoil cover 24 together form a smooth, aerodynamic surface along the suction side of the aircraft wing 12.

In the illustrated embodiment, the D-nose cover 102 is formed from aluminium sheet. However, in other embodiments, the D-nose cover 102 may be formed from other suitable materials. For example, in some embodiments, the D-nose cover 102 may be formed of a composite material.

Referring now to the riblet 110, as shown in Figure 3, the riblet 110 is of a two-part construction and is made up of a first riblet portion 120 and a second riblet portion 130 which are joined together along a joint line (or split line) 140 which extends through a thickness of the riblet 110 between the first 120 and second 130 riblet portions.

It shall be appreciated that the first riblet portion 120 may alternatively be referred to as a "tail portion".

In the illustrated embodiment, the riblets 110 of the fixed leading edge assembly 100 are formed from a composite material. However, in other embodiments, the riblets 110 may be formed from other suitable materials. For example, in some embodiments, the riblets 110 may be milled from one or more billets of aviation grade aluminium alloy.

As shown in Figure 3, the first riblet portion 120 is substantially C-shaped when viewed in the spanwise (X-axis) direction and includes a body 122 and a pair of first 124 and second 126 aft projections which extend rearwardly away from the body 122 in the chordwise (Y-axis) direction towards the forward spar 21 of the wing box assembly 20.

The first 124 and second 126 aft projections are spaced apart in the thickness (Z-axis) direction such that a first cavity 128 is defined therebetween for receiving one or more aircraft sub-systems 150.

The one or more aircraft sub-systems 150 may be electrical sub-systems (e.g., power control systems, signalling control systems etc.), hydraulics sub-systems, hot air bleed sub-systems and/or mechanical sub-systems (e.g., drive-shafts) for actuating one or more control surface of the aircraft 10, such as the slats (not shown).

The first riblet portion 120 also includes a first aft mounting for attaching the first riblet portion 120 to the forward spar 21 of the wing box assembly 20.

In the illustrated embodiment, the first riblet portion 120 comprises a pair of first aft mountings 121, 123 for attaching the first riblet portion 120 (and hence the fixed leading edge assembly 100) to a pair of corresponding fittings 30, 32 provided on the forward spar 21 of the wing box assembly 20. However, it shall be appreciated that in other embodiments, a different number of first aft mountings may be provided.

As shown in Figure 3, in the illustrated embodiment, the pair of first aft mountings 121, 123 are located on the first and second aft projections 124, 126. As such, as with the first 124 and second 126 aft projections, the first aft mountings 121, 123 are spaced apart in the thickness (Z-axis) direction such that one of the first aft mountings 121 is located proximate to the upper airfoil cover 24 and the other of the first aft mountings 123 is located proximate to lower airfoil cover 24.

In the illustrated embodiment, the first aft mountings 121, 123 are positioned such that they lie on the same vertical plane. As shall be described in greater detail later within this application, providing the first aft mountings 121, 123 on the same vertical plane enables the fixed leading edge assembly 100 to be build up in a series of layers, thereby improving ease of access for assembly personnel.

The first aft mountings 121, 123 are attached to the respective fittings 30, 32 provided on the forward spar 21 of the wing box assembly 20 via a "part-to-part" connection meaning that the first aft mountings 121, 123 are without a fastener hole prior to aligning the first riblet portion 120 to the wing box assembly 20 during construction of the aircraft wing 12.

It shall be appreciated that the term "part-to-part" connection is well understood in the art and refers to a joining method in which two (or more) components, in this case the first riblet portion 120 and the forward spar 21, are brought together and drilled prior to final assembly.

Advantageously, the use of a so-called "part-to-part" connection between the first riblet portion 120 and the forward spar 21 provides manufacturers with improved tolerance control in the thickness-wise (Z-axis) and spanwise (X-axis) directions during assembly of the aircraft wing 12.

However, it shall be appreciated that in other embodiments, other types of connection, such as "hole-to-hole" connections may be used.

Referring still to Figure 3, the first riblet portion 120 also includes a forward mounting which is provided on the body 122 of the first riblet portion 120, opposite to the first aft mounting.

In the illustrated embodiment, the first riblet portion 120 comprises a pair of forward mountings 125, 127 which are configured to facilitate attachment of the first riblet portion 120 to the second riblet portion 130. However, it shall be appreciated that in other embodiments, a different number of forward mountings may be provided.

As shown in Figure 3, as with the pair of first aft mountings 121, 123, the pair of the forward mountings 125, 127 are spaced apart in the thickness (Z-axis) direction such that one of the forward mountings 125 is located proximate to the upper airfoil cover 24 and the other of the forward mountings 127 is located proximate to lower airfoil cover 24.

In the illustrated embodiment, the forward mountings 125, 127 are spaced apart in the thickness (Z-axis) direction such that the Z-axis positions of the forward mountings 125, 127 correspond to the Z-axis positions of the first aft mountings 121, 123. However, it shall be appreciated that in other embodiments, the forward mountings and the first aft mountings may be provided at different Z-axis positions.

Considering now the second riblet portion 130, the second riblet portion 130 is substantially D-shaped when viewed in the spanwise direction and hence may alternatively be referred to as a "leading edge D-nose portion".

As with the first riblet portion 120, the second riblet portion 130 comprises a second aft mounting which is configured for facilitating attachment of the second riblet portion 130 to the forward mountings 125, 127 of the first riblet portion 120.

It shall be appreciated that the number of second aft mountings provided on the second riblet portions 130 will typically correspond to the number of forward mountings provided on the first riblet portion 120.

As such, in the illustrated embodiment, the second riblet portion 130 comprises a pair of second aft mountings 132, 134 which are spaced apart in the thickness (Z-axis) direction such that the Z-axis positions of the second aft mountings 132, 134 correspond to the respective Z-axis positions of the forward mountings 125, 127. However, it shall be appreciated that in other embodiments, a different number of second aft mountings may be provided.

In the illustrated embodiment, the first 120 and second 130 riblet portions are joined together via a series of "hole-to-hole" connections meaning that forward mountings 125, 127 (provided on the first riblet portion 120) and second aft mountings 132, 134 (provided on the second riblet portion 130) each comprise a pre-drilled fastener hole.

The term "hole-to-hole" connection is well understood in the art and refers to a connection in which a fastener hole is formed in the two (or more) components, in this case the first 120 and second 130 riblet portions, before said components have been brought together. In other words, the first 120 and second 130 riblet portions are brought together and joined for the first time during final assembly.

This differs from so called "part-to-part" connections in which the two (or more) components are brought together and drilled prior to final assembly.

As such, the use of fastener hole (or hole-to-hole) connections enables the respective riblet portions 120, 130 to be joined without requiring any part-to-part drilling prior to final assembly.

It shall be appreciated that in the illustrated embodiment, the use of more time-consuming "part-to-part" connections is reserved for "aerodynamically critical" regions of the fixed leading edge assembly 100 (such as the connection between the first riblet portion 120 and the forward spar 21 where the flushness of the upper and lower airfoil covers 24 and the D-nose cover 102 is of high importance) whereas less "aerodynamically critical" regions of the fixed leading edge assembly 100 utilise faster "hole-to-hole" connections.

In this manner, aircraft assembly times (and hence production throughput) can be improved whilst also maintaining excellent tolerance control at aerodynamically critical regions of the aircraft 10.

As shown in Figure 3, the fastener holes provided in the first 120 and second 130 riblet portions extend in the chordwise (Y-axis) direction and are arranged so as to form a channel, which extends across the joint line 140, when the first 120 and second 130 riblet portions are brought together.

The respective channels formed by the fastener holes of the forward and second aft mountings are each configured to receive a corresponding fastener (not shown) which extends in the chordwise direction across the joint line 140 between the respective fastener holes thereby joining the first 120 and second 130 riblets.

In some examples, the forward mountings 125, 127 provided on the first riblet portion 120 or the second aft mountings 132, 134 provided on the second riblet portion 130 may also be pre-installed with a captive nut (not shown) such that only the fasteners (e.g., a bolt) needs to be installed into the respective channels during assembly.

In the illustrated embodiment, the riblet 110 comprises a pair of forward 125, 127 and second aft 132, 134 mountings and hence a pair of fasteners (e.g., bolts) are provided which extend in the chordwise direction between the respective fastener holes. However, it shall be appreciated that in other embodiments, a different number of fasteners may be provided.

It shall also be appreciated that in some embodiments, the forward mountings and/or the second aft mountings may comprise an eccentric bush (not shown) configured for adjusting a position and/or orientation of the fastener hole with respect to the second aft mountings and/or the forward mountings. It shall be appreciated that rotating the eccentric bush adjusts the position of the fastener hole in the thickness (Z) and spanwise (X) directions.

Advantageously, the provision of an eccentric bush affords manufacturers with improved tolerance control in the thickness-wise (Z-axis) direction between the first 120 and second 130 riblet portions. Furthermore, since the use of eccentric bushes can be implemented without requiring any part-to-part drilling prior to final assembly, the aforementioned improvement in tolerance control can also be achieved without adversely impacting assembly times.

However, it shall be appreciated that in other embodiments, the fastener holes associated with the forward and/or second aft mountings may alternatively be of a fixed position.

Referring still to Figure 3, in the illustrated embodiment, the riblet 110 further comprises a second cavity 142, which is spaced apart from the first cavity 128 in the chordwise (Y-axis) direction, for receiving one or more further aircraft sub-systems 152.

As specified previously, the one or more further aircraft sub-systems 152 may be electrical sub-systems (e.g., power control systems, signalling control systems etc.), hydraulics sub-systems, hot air bleed sub-systems and/or mechanical sub-systems (e.g., drive-shafts) for actuating one or more control surface of the aircraft 10, such as the slats (not shown).

As shown in Figure 3, the second cavity 142 is formed between the first 120 and second 130 riblet portions and is intersected by the joint line 140 which enables the components which make up the one or more further aircraft sub-systems 152 to be more easily laid into the second cavity during assembly of the aircraft wing 12.

In other words, a first portion of the second cavity 142 is defined by a recess provided in the first riblet portion 120 and a second portion of the second cavity 142 is defined by a recess provided in the second riblet portion 130.

However, it shall be appreciated that in other embodiments, the second cavity 142 may instead be fully defined by a recess (or cut-out) provided in the first riblet portion 120 or may be fully defined by a recess (or cut-out) provided in the second riblet portion 130. In other words, the second cavity 142 may be provided fully within the first 120 or second 130 riblet portions.

It shall also be appreciated that in some embodiments, one or more further cavities may be provided about the riblet 110. Such cavities may be provided in the first riblet portion 120, the second riblet portion 130 and/or along the joint line 140 which extends between the first 120 and second 130 riblet portions.

Referring now to the D-nose cover 102, as shown in Figure 3, the D-nose cover 102 is attached at a first end to the second riblet portion 120 and is attached at a second end to the upper airfoil cover 24 via a skin or butt joint 104.

However, in the illustrated embodiment, the D-nose cover 102 is not directly connected to the first riblet portion 120.

Notably, it has been found that leaving the first riblet portion 120 unconnected to the D-nose cover 102 provides the fixed leading edge assembly 100 with a tolerance gap in the thickness (Z-axis) direction to allow for vertical adjustments of the position of the first riblet portion 120 relative the second riblet portion 130 as may be required to in order to meet aerodynamic requirements and/or to manage the gap between the D-nose cover 102 of the fixed leading edge assembly 100 and the upper airfoil cover 24 of the starboard wing 12.

In the illustrated embodiment, the D-nose cover 102 also comprises an access hole 106, which is provided in a portion of the D-nose cover 102 proximate to the lower airfoil cover 24, to provide assembly or ground maintenance personnel with access to inside the fixed leading edge assembly 100. In particular, during the assembly process of joining the fixed leading edge assembly 100 to the wing box assembly 20, the access holes 106 is revealed when an access panel 106a (shown as being detached from the D-nose cover 102 in Figure 3) is removed thereby enabling access for adjusting, drilling, fastening and cleaning tools to be introduced into the areas around one or more of the riblets 110.

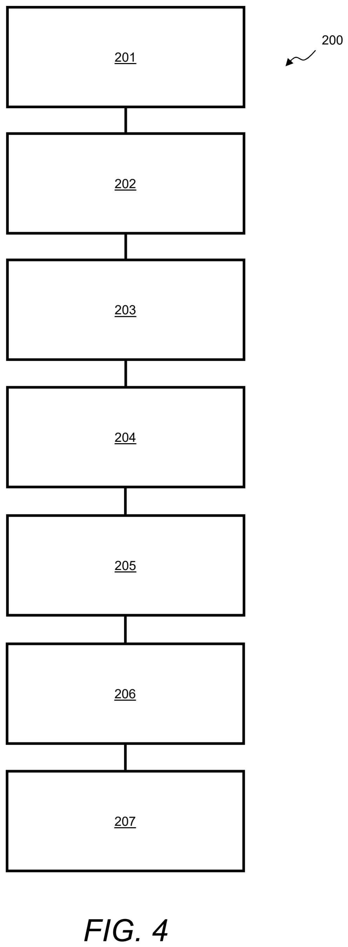

Referring now to Figures 4 and 5, a method 200 of assembling an aircraft wing according to an embodiment of the present invention shall now be described.

During a first step 201 of the aforementioned method 200, the first riblet portions 120 are brought together with the forward spar 21 of the wing box assembly 20 such that the first aft mountings 121, 123 provided on the first riblet portions 120 are brought into alignment with the respective fittings 30, 32 provided on the forward spar 21.

As shown in Figure 5A, during step 201, the first riblet portions 120 are not attached to the second riblet portions 130 (nor are the first riblet portions 120 attached to the D-nose cover 102) which makes it easier for assembly personnel to manoeuvre the first riblet portions 120 into the required positions.

It shall be appreciated that during step 201, the respective first riblet portions 120 may be individually aligned in a one-by-one fashion to the respective fittings 30,32 provided on the forward spar 21 of the wing box assembly 20 or, as shown in Figure 5A, in some embodiments the first riblet portions 120 may be secured to a jig 170 prior to step 201, thereby enabling a plurality of first riblet portions 120 to be simultaneously aligned with the corresponding fittings 30, 32 provided on the forward spar 21.

Referring now to Figure 5B, once the first aft mountings 121, 123 of the first riblet portions 120 have been properly aligned with the respective fittings 30, 32 provided on the forward spar 21, a series of fastener holes (not shown) are drilled into the aircraft wing 12 during step 202.

Each fastener hole (not shown) extends through a respective one of the fittings 30, 32 provided on the forward spar 21 and also through the corresponding first aft mounting 121, 123 (provided on the first riblet portion 120) which is aligned with said fitting 30, 32 such that one or more fasteners can be received within said fastener holes for securing the first riblet portions 120 to the forward spar 21 of the wing box assembly 20.

In the illustrated embodiment, the first riblet portions 120 each comprises a pair of first aft mountings 121, 123 which align with a pair of corresponding fittings 30, 32 provided on the forward spar 21 of the wing box assembly 20.

As such, in the illustrated embodiment, a pair of fastener holes (not shown) are drilled into the aircraft wing 12 during step 202 for each of the first riblet portions 120, the first of which extends through one of the respective fittings 30 and through the corresponding first aft mounting 121 with which the first of said fittings 30 is aligned, and the second of which extends through the other of the respective fittings 32 and through the corresponding first aft mounting 123 with which the second of said fittings is aligned.

However, it shall be appreciated that in embodiments featuring a different number of first aft mountings and/or fittings, a different number of fastener holes (not shown) may be drilled for each of the first riblet portions 120.

In the embodiment illustrated in Figure 3, the respective fastener holes (not shown) are drilled such that they extend in the spanwise (X-axis) direction relative to the aircraft wing 12. However, in other embodiments, said fastener holes (not shown) may be drilled in different orientations.

Referring now to Figure 5C, once the respective fastener holes (not shown) have been drilled into the first aft mountings 121, 123 and into the corresponding fittings 30, 32, the first riblet portions 120 are brought out of contact with (or removed from) the forward spar 21 during step 203 such that the respective fastener holes (not shown) can be cleaned in preparation for final assembly.

Optionally, during step 203, once the first riblet portions 120 have been removed, one or more aircraft sub-systems 150 may also be installed in the space 34 defined between the pairs of fittings 30, 32 provided on the forward spar 21.

As specified previously, the one or more aircraft sub-systems 150 may be electrical sub-systems (e.g., power control systems, signalling control systems etc.), hydraulics sub-systems, hot air bleed sub-systems and/or mechanical sub-systems (e.g., drive-shafts) for actuating one or more control surface of the aircraft 10, such as the slats (not shown).

Referring now to Figure 5D, once the respective fastener holes (not shown) have been cleaned, and optionally once the one or more aircraft sub-systems 150 have been installed onto the space 34 provided between the respective fittings 30, 32, the first riblet portions 120 are brought back into contact with the forward spar 21 such that the first aft mountings 121, 123 are re-aligned with the corresponding fittings 30, 32.

Then, during step 204, one or more fasteners (e.g., bolts) are inserted into the fastener hole(s) drilled into the aircraft wing 12 during step 202 so as to attach the first riblet portions 120 to the forward spar 21 of the wing box assembly 20, and thereby securing the first riblet portions 120 to the aircraft wing 12.

As shown in Figure 3, it shall be appreciated that as the first riblet portions 120 are joined to the forward spar 21, the one or more aircraft sub-systems 150 will become enveloped by the first cavities 128 defined between the respective aft projections 124, 126 of the first riblet portions 120 such that the one or more aircraft sub-systems 150 are received in the space defined between the first cavities 128 and the forward spar web 27.

It shall also be appreciated that in the present invention, since the first riblet portions 120 can be attached to the forward (e.g., leading edge) spar 21 prior to attachment of the second riblet portion 130, aircraft assembly personnel are provided with full and uninterrupted access to the first riblet portions 120 and to the corresponding fittings 30, 32 provided on the forward (e.g., leading edge) spar 21 which greatly improves ease of assembly and hence thereby helps to reduce aircraft assembly times.

Referring now to Figure 5E, once the first riblet portion 120 has been secured to the forward spar 21 of the wing box assembly 20, one or more further aircraft sub-systems 152 may be installed into the recesses provided in the first riblet portion 120 which define the first portion of the second cavity 142 during step 205.

As specified previously, the one or more further aircraft sub-systems 152 may be electrical sub-systems (e.g., power control systems, signalling control systems etc.), hydraulics sub-systems, hot air bleed sub-systems and/or mechanical sub-systems (e.g., drive-shafts) for actuating one or more control surface of the aircraft 10, such as the slats (not shown).

However, it shall be appreciated that in alternative embodiments, the one or more further aircraft sub-systems 152 may be installed into the recesses provided in the second riblet portions 130 which defines the second portion of the second cavity 142 during step 205, thereby enabling the one or more further aircraft sub-systems 152 to the installed in the second riblet portions 130 concurrently as the first riblet portions 120 are being secured to the forward spar 21.

Referring now to Figure 5F, once the first riblet portions 120 have been attached to the forward spar 21, the second riblet portions 130 are brought together with the first riblet portions 120 such that the second aft mountings 132, 134 provided on the second riblet portions 130 align with the forward mountings 125, 127 provided on the first riblet portions 120.

The second aft mountings 132, 134 of the second riblet portions 130 are then attached to the forward mountings 125, 127 of the first riblet portions 120 during step 206 via inserting respective fasteners (e.g., bolts) into the fastener holes provided in the first 120 and second 130 riblet portions, thereby securing the second riblet portions 130 to the first riblet portions 120.

As specified above, in some examples the forward mountings 125, 127 provided on the first riblet portion 120 or the second aft mountings 132, 134 provided on the second riblet portion 130 may be pre-installed with a captive nut (not shown).

As such, during step 206, the respective fasteners (e.g., bolts) may be inserted into the respective channels defined by the second aft 132, 134 and forward mountings 125, 127 via the access hole 106 provided in the D-nose cover 102 before being secured via the respective nuts.

Finally, during step 207, the D-nose cover 102 is attached to the second riblet portions 130 thereby completing assembly of the fixed leading edge assembly 100.

It shall be appreciated that in the illustrated embodiment method steps 201 to 207 are performed sequentially.

However, it shall be appreciated that in other embodiments, step 207 may be performed prior to step 206 so as to obtain a fixed leading edge module 300 comprising a D-nose cover 102 and a plurality of second riblet portions 130 to which the D-nose cover 102 is attached.

The second aft mountings 132, 134 of the second riblet portions 130 may then be attached to the forward mountings 125, 127 of the one or more first riblet portions 120 during step 206 thereby attaching the fixed leading edge module 300 to the forward spar 21 of the wing box assembly 20.

It shall also be appreciated that in some embodiments in which the one or more further aircraft sub-systems 152 are installed into the recesses provided in the second riblet portions 130, step 205 may be performed prior to step 204.

As such, as well as improving ease of access for aircraft assembly personnel, the method according to the claimed invention allows aircraft assembly personnel to carry out work on the second riblet portions 130 concurrently as the first riblet portions 120 are being joined to the forward spar 21, thereby helping to further reduce airfoil assembly times and hence further improving production throughput.

Whilst the present invention has been described above in relation to an aircraft wing 12, it shall be appreciated that aspects of the present invention may also be used for the construction of other types of airfoil structure be it on an aircraft or for use in wider non-aerospace applications.

Where the word 'or' appears this is to be construed to mean 'and/or' such that items referred to are not necessarily mutually exclusive and may be used in any appropriate combination.

Although the invention has been described above with reference to one or more preferred embodiments, it will be appreciated that various changes or modifications may be made without departing from the scope of the invention as defined in the appended claims.

## Claims

1. A riblet for a fixed leading edge (FLE) assembly comprising a first riblet portion and a second riblet portion,
wherein the first riblet portion comprises a first aft mounting for attaching the first riblet portion to a wing box assembly, and a forward mounting opposite the first aft mounting; and
wherein the second riblet portion comprises a second aft mounting for attaching the second riblet portion to the forward mounting of the first riblet portion.

2. The riblet according to claim 1, wherein the forward mounting of the first riblet portion and the second aft mounting of the second riblet portion each comprise a fastener hole, and wherein the riblet further comprises at least one fastener extending in a chordwise direction between said fastener holes.

3. The riblet according to claim 2, wherein at least one of the forward mounting and/or the second aft mounting comprises an eccentric bush for adjusting a position and/or orientation of the fastener hole with respect to the second aft mounting and/or the forward mounting.

4. The riblet according to any preceding claim, wherein the first aft mounting of the first riblet portion is without a fastener hole prior to aligning the first riblet portion to the wing box assembly.

5. The riblet according to any preceding claim, wherein the first riblet portion comprises first and second aft projections which are spaced apart in the thickness direction, and wherein the first riblet portion further comprises a first cavity defined between the first and second aft projections, said first cavity being configured for receiving one or more aircraft sub-systems.

6. The riblet according to any preceding claim, wherein the first riblet portion comprises a plurality of first aft mountings which are spaced apart in the thickness direction, and, optionally, wherein the plurality of first aft mountings lie on the same plane.

7. The riblet according to claims 6, when dependent on claim 5, wherein the plurality of first aft mountings are located on the first and second aft projections.

8. The riblet according to any preceding claim, wherein the riblet further comprises a second cavity formed between the first and second riblet portions, said second cavity being configured for receiving one or more aircraft sub-systems.

9. The riblet according to claim 8, wherein the riblet comprises a joint line which extends through a thickness of the riblet between the first and second riblet portions, and wherein said joint line intersects the second cavity.

10. A fixed leading edge (FLE) assembly comprising:
a riblet according to any preceding claim; and
a D-nose cover which defines an aerodynamic surface of the fixed leading edge assembly, wherein said D-nose cover is attached to the second riblet portion.

11. The fixed leading edge (FLE) assembly according to claim 10, wherein the D-nose cover is not directly connected to the first riblet portion.

12. An airfoil structure comprising:
a wing box assembly having a forward spar and at least one airfoil cover which defines an aerodynamic surface of the airfoil structure; and
a fixed leading edge (FLE) assembly according to claims 10 or 11, wherein said fixed leading edge assembly is attached to the forward spar via the first aft mounting of the first riblet portion.

13. An aircraft comprising the airfoil structure according to claim 12.

14. A method of assembling the airfoil structure according to claim 12, wherein said method comprises:
a) aligning the first aft mounting of the first riblet portion with a respective fitting provided on a forward spar of the airfoil structure;
b) drilling at least one hole into the airfoil structure for receiving a respective fastener, wherein said hole extends through the fitting and through the first aft mounting of the first riblet portion;
c) inserting a fastener into the at least one hole so as to attach the first riblet portion to the fitting provided on the forward spar; and
d) after the first riblet portion has been attached to the forward spar, attaching the second aft mounting of the second riblet portion to the forward mounting of the first riblet portion.

15. A fixed leading edge (FLE) module comprising:
a D-nose cover which defines an aerodynamic surface of the fixed leading edge (FLE) module; and
a second riblet portion comprising a second aft mounting for attaching to a forward mounting of a first riblet portion, wherein said D-nose cover is attached to the second riblet portion.
